(19) Europäisches Patentamt
European Patent Office
Office européen des brevets

(11) **EP 2 138 297 B1**

(12) **EUROPÄISCHE PATENTSCHRIFT**

(45) Veröffentlichungstag und Bekanntmachung des Hinweises auf die Patenterteilung:
**29.06.2011 Patentblatt 2011/26**

(51) Int Cl.:
***B29C 47/10*** *(2006.01)*

(21) Anmeldenummer: **09006636.6**

(22) Anmeldetag: **16.05.2009**

(54) **Verfahren und Vorrichtung zur Herstellung einer faserbeladenen Kunststoffschmelze**

Method and device for manufacturing a plastic melt containing fibres

Procédé et dispositif destinés à la fabrication d'une matière plastique en fusion chargée en fibres

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **16.06.2008 DE 102008028287**

(43) Veröffentlichungstag der Anmeldung:
**30.12.2009 Patentblatt 2009/53**

(73) Patentinhaber: **Leistritz Extrusionstechnik GmbH**
**90459 Nürnberg (DE)**

(72) Erfinder: **Siegelin, Dieter**
**90518 Altdorf (DE)**

(74) Vertreter: **Blaumeier, Jörg**
**LINDNER I BLAUMEIER**
**Patent- und Rechtsanwälte**
**Dr.-Kurt-Schumacher-Strasse 23**
**90402 Nürnberg (DE)**

(56) Entgegenhaltungen:
WO-A-2007/070086    DE-A1- 2 100 096
DE-A1- 10 152 246    US-A1- 2003 003 291

**EP 2 138 297 B1**

**Beschreibung**

Die Erfindung betrifft ein Verfahren zur Herstellung einer faserbeladenen Kunststoffschmelze unter Verwendung eines Extruders mit wenigstens zwei Schnecken, bei welchem Verfahren neben dem oder den aufzuschmelzenden Kunststoffmaterialien wenigstens ein endloser Faserstrang zugeführt und vom Extruder eingezogen wird.

Es ist bekannt, die mechanischen Eigenschaften thermoplastischer Kunststoffe durch Zugabe von Fasermaterial wie beispielsweise Glasfasern oder Kohlestofffasern zu beeinflussen. Die Fasern werden bereits bei der Herstellung der Kunststoffschmelze, aus welcher sodann über eine nachgeschaltete Verfahrenseinheit die gewünschten Kunststoffgegenstände hergestellt werden (z.B. in Form von weiter zu verarbeitendem Granulat, von Strangmaterial oder von in die endgültige Form gespritzten Kunststoffgegenstände), eingebracht. Hierzu wird ein oder werden mehrere endlose Faserstränge dem Extruder zugeführt, sie laufen direkt in den Einzugsbereich der Extruderschnecken und werden von diesen eingezogen. Der oder die endlosen Faserstränge werden von entsprechenden Rollen, häufig auch "Roving" genannt, abgewickelt. Die Fasern sind sehr dünn und haben ein bestimmtes Fasergewicht pro Längeneinheit (g/m). Nachdem der Fasergehalt die mechanischen Eigenschaften der Kunststoffschmelze respektive des hergestellten Kunststoffelements beeinflusst, ist es erforderlich, die dem Extruder zugeführte Fasermenge zu ermitteln, um zu prüfen, ob die zugeführte Fasermenge einer vorgegebenen Sollfasermenge entspricht, die die Kunststoffschmelze enthalten muss, damit die hergestellten Kunststoffgegenstände den gewünschten Faseranteil aufweisen. Hierzu ist es beispielsweise aus DE 101 52 246 A1 bekannt, die Fasermenge dadurch zu erfassen, dass das Gewicht der Spulen, von denen die einzelnen Fasern abgezogen werden, erfasst wird und aus der Gewichtsabnahme die zugeführte Fasermenge ermittelt wird. Hierzu befinden sich die Spulen auf einem geeigneten Waagteller einer Wiegeeinrichtung. Diese Erfassung der zugeführten Fasernmasse über die Gewichtsabnahme der Rollen ist jedoch relativ ungenau, da eine Abweichung des Glasfaseranteils erst nach längerer Zeit detektierbar ist. Denn das Metergewicht eines Fadens oder Rovings beträgt ca. 1 - 2 g, so dass sich eine Differenz zwischen der zugeführten Fasermenge und der gewünschten Soll-Fasermenge erst nach geraumer Zeit konkret feststellen lässt. Dann aber wurde bereits eine beachtliche Schmelzmasse produziert, die einen fehlerhaften Faseranteil aufweist, das heißt, dass zwischenzeitlich Fehlteile produziert wurden, wobei eine Rückverfolgung dahingehend, bei welchem Teil die Abweichung begonnen hat, nicht möglich ist. Am fertigen Teil kann der Glasfaseranteil nur durch Veraschung und anschließendes Auswiegen der Glasfasern festgestellt werden. Eine kontinuierliche Qualitätskontrolle ist damit nicht möglich. Weitere Verfahren und Vorrichtungen werden in DE 3541532, DE2100096 und WO 2007 070086 gezeigt.

Der Erfindung liegt damit das Problem zugrunde, ein Verfahren anzugeben, das eine genaue Erfassung der zugeführten Fasermenge ermöglicht.

Zur Lösung dieses Problems ist ein Verfahren und eine Vorrichtung nach den unabhängigen Ansprüchen 1 und 4 vorgeschlagen.

Das erfindungsgemäße Verfahren ermittelt kontinuierlich das tatsächlich pro Zeiteinheit zugeführte Fasergewicht, so dass zu jedem Zeitpunkt eine genaue Kenntnis über die tatsächlich pro Zeiteinheit zugeführte Fasermenge zur Schmelze gegeben ist. Die Ermittlung des Fasergewichts erfolgt zum einen dadurch, dass kontinuierlich die geförderte Stranglänge, also die Faserlänge, die tatsächlich zum Extruder gefördert wird, erfasst wird. In Abhängigkeit der pro Zeiteinheit zugeführten Stranglänge (also z.B. der zugeführten laufenden Meter pro Sekunde) und des bekannten Stranggewichts pro Längeneinheit (also z.B. des 1 g/m) kann nun absolut exakt das pro Zeiteinheit tatsächlich zugeführte Fasergewicht bestimmt werden, also z.B. die g/s, die tatsächlich in den Extruder gelangt sind. Selbstverständlich kann die Zeiteinheit auch anders gewählt werden, z.B. in 10 s-Intervallen, was letztlich beliebig gewählt werden kann, nachdem die Rechenparameter stets die gleichen sind.

Es erfolgt hier also eine echte gravimetrische Erfassung respektive eine tatsächliche gravimetrische Zuführung der Fasern, nachdem alle Bestandteile, die zugegeben werden (einschließlich natürlich der Kunststoffmaterialien) exakt nach ihrem Gewicht dosiert werden können. Die Dosierung erfolgt über die Einstellung der Schneckendrehzahl, nachdem wie beschrieben der Extruder selbst beziehungsweise seine Schnecken die Fasern einziehen. Ergibt sich also anhand der Online-Erfassung, dass eine Abweichung des ermittelten Fasergewichts vom gemäß vorgegebener Rezeptur definierten Soll-Fasergewicht, das pro Zeiteinheit zuzuführen ist, gegeben ist, kann sofort die Schneckendrehzahl nachgeregelt werden, so dass unmittelbar eine Korrektur einer etwaigen Abweichung möglich ist. Dies ermöglicht es zum einen, sofort auf etwaige Zufuhrfehler reagieren zu können, zum anderen ist eine sofortige Online-Qualitätskontrolle möglich, nachdem etwaige Differenzen sofort erfasst werden. Darüber hinaus ist es auch möglich, sehr exakt zu bestimmen, zu welchem Zeitpunkt erstmalig die Abweichung gegeben ist, so dass diese genau auf bestimmte produzierte Kunststoffteile referenziert werden kann, die dann als Ausschussteile ausgesondert werden.

Nachdem einer der zentralen Rechenparameter die zum Extruder geförderte Stranglänge ist, wird folglich auch jedwede Variation in der Zuführung erfasst, die sich umgehend in dem ermittelten Fasergewicht pro Zeiteinheit niederschlägt. Wird also ein Faserstrang langsamer als der andere gefördert, so wird dies sofort erfasst, auch ein aus welchen Gründen auch immer unbewegter Faserstrang, der also nicht zugeführt wird, wird sofort ermittelt, und es kann entsprechend im Rahmen der Drehzahlregelung darauf reagiert werden. Insbesondere bei Zuführung vieler Faserstränge (häufig werden mehrere zehn separate Fasern zugeführt) und der erfindungsgemäßen kontinuierlichen Erfassung jedes einzelnen geförderten Faserstrangs ist eine hochgenaue gravimetrische Verwiegung möglich. Selbstverständlich ist es möglich, eine gewisse Toleranzgrenze zu setzen, welche über- oder unterschritten werden muss, dass die Drehzahlregelung eingreift, je nach dem, wie die erfindungsgemäß vorgesehene Soll-Ist-Regelung ausgelegt wird. Hinsichtlich der Ermittlung des Fasergewichts pro Zeiteinheit bei Zufuhr mehrerer Faserstränge sind unterschiedliche Vorgehensweisen möglich. Nach einer ersten Erfindungsalternative ist bei Zufuhr mehrerer separater Faserstränge vorgesehen, kontinuierlich die geförderte Stranglänge jedes Faserstrangs zu erfassen und aus der pro Zeiteinheit zugeführten Gesamtlänge aller Faserstränge und dem Fasergewicht pro Längeneinheit sodann das Fasergesamtgewicht pro Zeiteinheit zu ermitteln und der Regelung zugrunde zu legen. Diese Erfindungsalternative, die bevorzugt bei Zufuhr von Fasern gleichen Typs respektive gleichem Fasergewicht der einzelnen Stränge zweckmäßig ist, sieht also vor, zunächst die Gesamtlänge aller pro Zeiteinheit zugeführten Faserstränge zu ermitteln und anhand dieser Gesamtlänge das Fasergesamtgewicht pro Zeiteinheit zu ermitteln und der Regelung zugrunde zu legen.

Eine Alternative sieht bei Zufuhr mehrerer separater Faserstränge vor, kontinuierlich die geförderte Stranglänge jedes Faserstrangs zu erfassen und anhand der pro Zeiteinheit zugeführten Stranglänge jedes Faserstrangs und des jeweiligen Stranggewichts pro Längeneinheit sodann das Fasergewicht jedes Faserstrangs zu ermitteln und das aus allen einzelnen Fasergewichten ermittelte Fasergesamtgewicht der Regelung zugrunde zu legen. Bei dieser Erfindungsausgestaltung, die auch den Einsatz verschiedener Fasertypen mit verschiedenen Metergewichten ermöglicht, werden also die einzelnen Fasergewichte pro Längeneinheit für jeden Strang separat erfasst und anschließend aus allen separaten Gewichtswerten das Gesamtgewicht errechnet.

Unabhängig davon, welche Ermittlungsart für das Fasergesamtgewicht angewendet wird, bietet jede Erfindungsalternative eine hochexakte, gravimetrisch äußerst genaue Verwiegemöglichkeit respektive Erfassung der tatsächlich zugeführten Fasermenge.

Eines der zentralen Verfahrensmerkmale ist wie einleitend beschrieben die kontinuierliche Erfassung der tatsächlich pro Faserstrang zugeführten Stranglänge pro Zeiteinheit. Diese Erfassung muss sehr genau erfolgen. Zweckmäßigerweise wird zur Erfassung der zugeführten Stranglänge ein über den bewegten Faserstrang betätigter Impulsgeber verwendet, wobei die Stranglänge anhand der pro Zeiteinheit erfassten Impulse und der pro Impuls geförderten Stranglänge ermittelt wird. Der Impulsgeber wird vorteilhaft durch den Faserstrang selbst betätigt, das heißt, dass jedweder erzeugte Impuls zwangsläufig auf einer entsprechenden Strangbewegung beruht. Wird ein Faserstrang nicht gefördert, so wird auch der Impulsgeber nicht betätigt, so dass zwangsläufig dieses fehlende zugeführte Fasergewicht nicht in die Gesamtgewichtsermittlung mit eingeht. Der Impulsgeber liefert bei bewegtem Strang kontinuierlich entsprechende Impulse, die lediglich aufzusummieren sind, wobei jedem Impuls eine entsprechende definierte geförderte Stranglänge entspricht, die auf diese Weise ohne weiteres anhand der gezählten Impulse pro Zeiteinheit ermittelt werden kann. Nachdem wie beschrieben die einzelnen Faserstränge allein über die Schnecken eingezogen werden, kann es bei Einzug mehrerer Faserstränge vorkommen, dass die Faserstränge unterschiedlich schnell bewegt werden. Diese Geschwindigkeitsdifferenzen können ebenfalls über einen solchen Impulsgeber hochgenau erfasst werden, nachdem wie beschrieben die Impulse in Abhängigkeit der Faserstrangbewegung gegeben werden, so dass die unterschiedlich schnelle Bewegung der einzelnen Fasern zu einer unterschiedlichen Anzahl an pro impulsgeber gegebenen Impuls führt.

Ein zweckmäßigerweise zu verwendender Impulsgeber umfasst vorteilhafterweise zwei einen Faserstrang zwischen sich aufnehmende Andruckrollen, wobei die Drehung wenigstens einer Andruckrolle optisch oder elektrisch erfasst wird. Der Faserstrang ist also zwischen zwei Andruckrollen aufgenommen, die bei einer Bewegung des Faserstrangs gedreht werden. Diese Drehung wird optisch (z.B. über eine Lichtschranke oder dergleichen) oder elektrisch (z.B. über an einer Andruckrolle befindliche Magnete, die ein Signal in einen ansprechenden Sensor induzieren) hochgenau erfasst. Die Andruckrollen werden dabei in ihrer Geometrie respektive vom Material her so gewählt, dass kein Schlupf entstehen kann.

Bei einer Gabe von z.B. zwei Impulsen pro 360 Grad-Umdrehung einer Andruckrolle ergibt sich folgende Berechnung für die pro Zeiteinheit zugeführte Fasermenge, wobei hier der zugeführte Durchsatz beziehungsweise das zugeführte Gewicht in kg/h berechnet wird:

$$[(\text{Impulse pro 10s}) \times (\text{zugeführte Stranglänge pro Impuls}) \times \text{Fasergewicht in g/m}] : 1000 \times 0{,}36$$

Die Zeiteinheit ist hier in 10 s angegeben, das heißt, es wird hier die Pulsanzahl pro 10 s Betriebszeit ermittelt. Die zugeführte Faserstranglänge pro Impuls ist bekannt, sie hängt von der Geometrie respektive dem Radius der Andruckrolle, die erfasst wird, ab. Auch ist das Fasergewicht pro Längeneinheit, hier in g/m, bekannt, es handelt sich hierbei um eine Materialkonstante. Anhand dieser Parameter kann nun ohne weiteres das tatsächlich zugeführte Fasergewicht ermittelt werden, wobei natürlich die Gewichtserfassung pro Zeiteinheit beliebig sein kann, sie ist selbstverständlich auch in g/s möglich.

Zur Regelung erfolgt sodann ein einfacher Soll-Ist-Vergleich, nachdem jeder herzustellenden Schmelzrezeptur eine bestimmte Fasermasse zueigen ist, mithin also zwangsläufig zur Einstellung dieser Fasermasse eine bestimmte Zufuhrmenge pro Zeiteinheit benötigt wird.

Neben dem Verfahren betrifft die Erfindung ferner eine Vorrichtung zur Herstellung einer faserbeladenen Kunststoffschmelze, umfassend einen Extruder mit wenigstens zwei Schnecken, eine Einrichtung zur kontinuierlichen Erfassung der zugeführten Stranglänge wenigstens eines dem Extruder zuzuführenden Faserstrangs, sowie eine Steuerungseinrichtung zur Ermittlung des Fasergewichts pro Zeiteinheit anhand der pro Zeiteinheit zugeführten Stranglänge und des Stranggewichts pro Längeneinheit und zur Einstellung der Schneckendrehzahl in Abhängigkeit des ermittelten Fasergewichts.

Die Steuerungseinrichtung, über die die Schneckendrehzahl in Abhängigkeit des ermittelten Fasergewichts geregelt oder gesteuert wird, ist zweckmäßigerweise die Steuerungseinrichtung des Extruders, die mit der Einrichtung zur Erfassung der Stranglänge kommuniziert. Selbstverständlich könnte jedoch die Steuerungseinrichtung auch eine externe Steuerungseinrichtung sein, die z.B. Teil der Stranglängenerfassungseinrichtung ist, und die dann ihrerseits mit der Extrudersteuerungseinrichtung kommuniziert.

Zur Erfassung der zugeführten Stranglänge bei Zufuhr mehrerer Faserstränge ist die Einrichtung entsprechend ausgebildet, das heißt, dass jeder einzelne Faserstrang über die Einrichtung erfasst wird. Die Steuerungseinrichtung zur Ermittlung des Fasergesamtgewichts pro Zeiteinheit ist in diesem Fall zur Ermittlung des Fasergewichts anhand der pro Zeiteinheit zugeführten Gesamtlänge aller Faserstränge und dem Fasergewicht pro Längeneinheit ausgebildet.

Alternativ zu dieser Ausgestaltung ist es bei Verwendung einer Einrichtung zur Erfassung der zugeführten Stranglänge jedes einzelnen Faserstrangs möglich, die Steuerungseinrichtung derart auszubilden, dass sie anhand der pro Zeiteinheit zugeführten Stranglänge jedes Faserstrangs und des jeweiligen Stranggewichts pro Längeneinheit zur Ermittlung des Fasergewichts jedes Faserstrangs und zur Ermittlung des Fasergesamtgewichts aus allen Fasergewichten ausgebildet ist. Hier erfolgt also die Ermittlung des Fasergesamtgewichts aus den einzelnen ermittelten Fasergewichten der einzelnen Stränge, während bei der zuvor beschriebenen Ausführungsform das Fasergesamtgewicht anhand der zugeführten Gesamtlänge aller einzelnen Stränge bestimmt wird.

Die Einrichtung zur Erfassung der Stranglänge umfasst zweckmäßigerweise eine der Anzahl zuzuführender Faserstränge entsprechende Anzahl an Impulsgebern, wobei die Steuerungseinrichtung zur Ermittlung der Stranglänge anhand der pro Zeiteinheit erfassten Impulse und der pro Impuls geförderten Stranglänge ausgebildet ist.

Ein Impulsgeber umfasst zweckmäßigerweise zwei einen Faserstrang zwischen sich aufnehmende Andruckrollen sowie ein Mittel zur optischen oder elektrischen Erfassung der Drehung wenigstens einer Andruckrolle. Ein optisches Erfassungsmittel kann beispielsweise eine Lichtschranke sein, die entsprechende Reflektoren, die an der Andruckrolle vorgesehen sind, erfasst. Ein elektrisches Erfassungsmittel ist beispielsweise ein Magnetfeldsensor respektive induktiver Sensor, der mit einem oder mehreren an der Andruckrolle vorgesehenen Magneten in Wechselwirkung steht, die elektrische Signale im Sensor induzieren.

In Weiterbildung kann vorgesehen sein, dass über die Steuerungseinrichtung bei Ermittlung einer außerhalb eines Toleranzbereichs liegenden Abweichung des tatsächlich zugeführten Fasergewichts pro Zeiteinheit von einem vorgegebenen Sollwert ein Informationssignal ausgebbar ist. Das heißt, dass der Betreiber der Vorrichtung sofort über eine etwaige Abweichung, die einer Nachregelung bedarf, informiert wird. Dies kann beispielsweise über eine Warnlampe oder über einen Bildschirm oder auch akustisch erfolgen. In jedem Fall ist eine Online-Protokollierung des gesamten Verfahrensablaufs z.B. über die zentrale Extrudersteuerungseinrichtung möglich, so dass jedwede Abweichung auch später ohne weiteres anhand des Herstellungsprotokolls nachvollzogen werden kann. Im Extremfall wäre es auch denkbar, den Extruder abzuschalten, sollte die Abweichung derart groß sein, dass eine vernünftige Nachregelung nicht möglich ist.

Weitere Vorteile, Merkmale und Einzelheiten der Erfindung ergeben sich aus dem im Folgenden beschriebenen Ausführungsbeispiel sowie anhand der Zeichnungen. Dabei zeigen:

Fig. 1    eine Prinzipdarstellung einer erfindungsgemäßen Vorrichtung, und

Fig. 2    eine Prinzipdarstellung einer Längenerfassungseinrichtung.

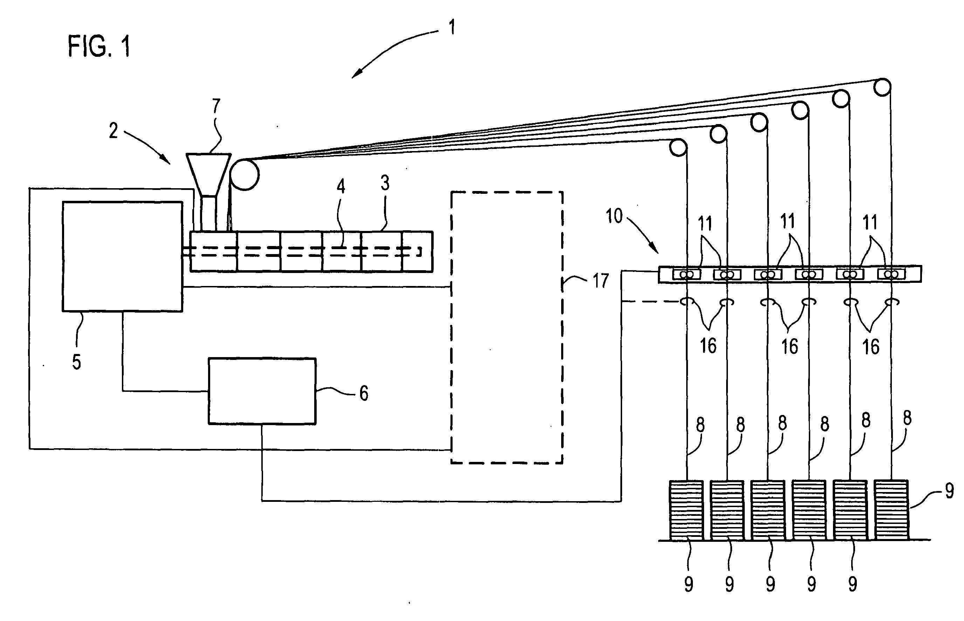

Fig. 1 zeigt eine erfindungsgemäße Vorrichtung 1 zur Herstellung einer faserbeladenen Kunststoffschmelze. Diese umfasst zum einen einen Extruder 2, der in hinlänglich bekannter Weise einen Zylinder 3, der hier aus einer Vielzahl einzelner Segmente besteht, sowie zwei oder mehr im Zylinder befindliche Schnecken 4 umfasst. Im gezeigten Beispiel ist lediglich eine Schnecke 4 gestrichelt dargestellt. Vorgesehen sind beispielsweise zwei miteinander kämmende Schnecken, die im Gleichlauf oder Gegenlauf betrieben werden. Der Antrieb der Schnecken erfolgt über einen Motor 5, der über eine Steuerungseinrichtung 6 insbesondere in seiner Drehzahl gesteuert wird, so dass hierüber die Drehzahl der zwei oder mehr Schnecken 4 gesteuert oder geregelt werden kann. Die Schmelze wird durch Zugabe geeigneter Kunststoffmaterialien erzeugt, die über eine entsprechende Zuführeinrichtung 7 dem Zylinder 3 zugegeben werden. Am freien Ende des Extruderzylinders 3 wird die Schmelze abgegeben. Lediglich gestrichelt ist hier eine weitere Verfahrenseinheit 17 dargestellt, bei der es sich um eine beliebige Verfahrenseinheit handeln kann, z.B. einen Granulierer, wenn Kunststoffpellets hergestellt werden sollen, oder um eine Einrichtung zur Herstellung dreidimensionaler Fertigteile, die aus der Schmelze geformt werden sollen, etc.

Die Kunststoffschmelze soll zur Einstellung der mechanischen Eigenschaft der hergestellten Kunststoffgegenstände mit Fasern in einem vorbestimmten Anteilsverhältnis versehen sein. Hierzu werden dem Zylinder 3 mehrere, im gezeigten Beispiel sechs, einzelne Faserstränge 8 zugeführt, die jeweils von entsprechenden Faserrollen 9 abgezogen werden. Am Zylinder 3 ist eine entsprechende, nicht näher gezeigte Zuföffnung vorgesehen. Die einzelnen Faserstränge werden von den Schnecken 4 durch deren Rotation automatisch eingezogen. Die von den Extruderschnecken 4 eingezogenen Faserstränge werden von den Schnecken geschnitten beziehungsweise gebrochen, so dass sich entsprechende kurze Faserabschnitte im Zylinderinneren bilden, die in der Kunststoffschmelze aufgenommen sind.

Um nun online und absolut exakt das tatsächlich zugeführte Fasergewicht erfassen zu können, um zu jeden Zeitpunkt genauestens den Faseranteil bestimmen zu können, den die erzeugte Kunststoffschmelze tatsächlich aufweist, ist eine Einrichtung 10 vorgesehen, die der kontinuierlichen Erfassung der zugeführten Stranglänge jedes einzelnen Faserstrangs 8 dient.

Die Einrichtung 10 umfasst im gezeigten Beispiel sechs einzelne Impulsgeber 11, entsprechend der Anzahl an zuzuführenden Fibersträngen 8. Selbstverständlich ist es möglich, eine beliebige Anzahl an Fibersträngen zuzuführen, die Anzahl der vorzusehenden Impulsgeber 11 entspricht stets der zuzuführenden Faseranzahl, so dass jeder einzelne Faserstrang in seiner Zuführlänge genauestens erfasst werden kann.

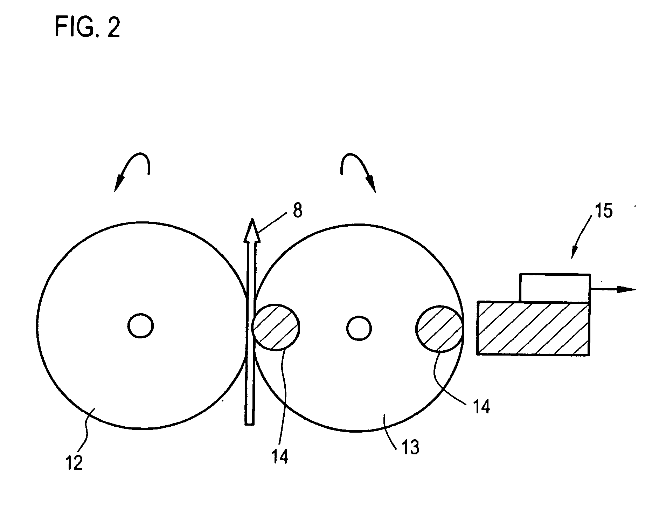

Wie Fig. 2 zeigt, umfasst jeder Impulsgeber 11 zwei Andruckrollen 12, 13, zwischen denen der jeweilige Faserstrang 8 aufgenommen ist. Die Geometrie sowie das verwendete Rollenmaterial ist derart, dass ein Schlupf vermieden wird. Die Drehung der beiden Andruckrollen 12, 13 wird allein durch die Bewegung des Faserstrangs 8 bewirkt, wie durch die beiden Pfeile dargestellt ist. Der Faserstrang 8 wird im gezeigten Beispiel gemäß Fig. 2 nach oben gezogen, so dass sich die entsprechenden Drehrichtungen der Rollen ergeben.

Zur genauen Erfassung der Stranglänge sind im gezeigten Beispiel an der Andruckrolle 13 zwei Signalelemente 14 vorgesehen, die mit einem entsprechenden Sensor 15 zur Impulserzeugung zusammenwirken. Bei den Signalelementen 14 kann sich beispielsweise um Metalleinlassungen oder Magnete handeln, die mit dem induktiv arbeitenden Sensor 15 zusammenwirken. Bei jeder 360 Grad-Drehung der Andruckrolle 13 werden zwei Signale im Sensor 15 induktiv erfasst, so dass pro 360°-Drehung zwei Impulse von der Sensoreinrichtung 15 an die Steuerungseinrichtung 6 gegeben werden.

Alternativ zur Verwendung eines induktiven Sensors ist es auch möglich, einen optischen Sensor zu verwenden. Die Signalelemente 14 wären dann beispielsweise reflektierende Elemente, die von dem lichtschrankenartig arbeitenden Sensor 15 erfasst werden.

Die Steuerungseinrichtung erhält nun von jedem Impulsgeber 11 entsprechende Impulse, die sie pro gemessener Zeiteinheit (die über ein entsprechendes Zeitglied ermittelt wird) aufaddiert, so dass mithin zu jedem zugeführten Faserstrang pro Zeiteinheit (z.B. einem Intervall von 10 s oder 30 s) die Impulszahl bekannt ist. Bekannt ist seitens der Steuerungseinrichtung 6 ferner die Stranglänge, die pro Impuls, also pro 180°-Drehung der Andruckrolle 13, zum Extruder gefördert wird. Aus diesen Informationen kann seitens der Steuerungseinrichtung sodann die zugeführte Stranglänge eines jeden einzelnen Faserstrangs pro Zeiteinheit (z.B. der beschriebenen 10 s oder 30 s) erfasst werden. Weiterhin ist der Steuerungseinrichtung das jeweilige Fasergewicht pro laufende Meter bekannt, beispielsweise 1,5 g. Aus der pro Zeiteinheit geförderten Stranglänge sowie dem jeweiligen Fasergewicht kann nun mit hoher Genauigkeit die tatsächliche Fasermenge pro Zeiteinheit, die tatsächlich dem Extruder zugeführt wird, bestimmt werden. Hieraus werden sodann seitens der Steuerungseinrichtung 6 der Gesamtdurchsatz-Ist-Wert in g/s oder kg/h ermittelt, also der Ist-Faseranteil, der dem Extruder tatsächlich zugeführt wird.

Die Steuerungseinrichtung vergleicht nun diesen Ist-Wert mit einem gemäß der gewünschten Rezeptur vorgegebenen Soll-Wert. Ergibt sich, dass der Ist-Wert, also das tatsächlich zugeführte Fasergewicht pro Zeiteinheit, dem Soll-Wert, also dem Soll-Fasergewicht pro Zeiteinheit, entspricht oder in einem gegebenenfalls bestimmten Toleranzbereich liegt, ist keine Nachregelung erforderlich. Eine Abweichung jedoch führt zu einer sofortigen Nachregelung der Drehzahl der Extruderschnecke, worüber die zugeführte Fasermenge erhöht oder erniedrigt werden kann, nachdem wie beschrieben allein die Schneckenrotation für den Fasereinzug verantwortlich ist.

Sei beispielsweise gemäß Rezeptur ein Kunststoffanteil von 80% in der Schmelze sowie ein Faseranteil von 20 % in der Schmelze vorgegeben, und ist eine Schmelzausstoßmenge von 300 kg/h eingestellt, so ergibt sich hieraus, dass pro Stunde 60 kg Fasernmaterial zugeführt werden muss. Aus dem Fasergewicht pro Meter kann somit genau ermittelt werden, wie viel Faserstrangmenge pro Zeiteinheit, beispielsweise pro 10 s-Intervall, zugeführt werden muss.

Das heißt, das Einzugsgewicht der gesamten Fasern kann genauestens ermittelt werden. Dieser Wert entspricht dann dem Soll-Wert des einzuziehenden Fasergesamtgewichts. Mit diesem Sollwert wird sodann der wie beschrieben kontinuierlich ermittelte Ist-Wert des Fasergewichts verglichen und je nach dem eine etwaige Abweichung nachgeregelt. Eine Abweichung von bereits wenigen Gramm kann aufgrund der kontinuierlichen Erfassung hochgenau ermittelt werden. Denn infolge der Kenntnis über das pro Zeiteinheit, hier also beispielsweise pro 10 s, zuzuführende Fasergewicht und die Erfassung des tatsächlich zugeführten Fasergewichts pro 10 s ist letztlich eine Abweichung vom Soll-Wert innerhalb nur zweier Zeitintervalle ermittelbar. Das heißt, dass eine Online-Kontrolle respektive Online-Messung und damit eine genaue gravimetrische Online-Verwiegung mit dem erfindungsgemäßen Verfahren respektive der erfindungsgemäßen Vorrichtung möglich ist.

Das Fasergewicht pro Längeneinheit, also die Angabe der g/m, kann der Steuerungseinrichtung 6 beispielsweise manuell über ein geeignetes Bedientableau gegeben werden. Selbstverständlich wäre es auch denkbar, bei Aufnahme des Betriebs dies über geeignete Lesemittel von entsprechenden Rollenkennzeichnungen (Barcode oder dergleichen) auszulesen. Fig. 1 zeigt ferner noch den Einsatz entsprechender Sensorelemente 16, die stets das Vorhandensein eines Faserstrangs 8 ermitteln. Diese sind im gezeigten Beispiel den Impulsgebern 11 vorgeschaltet. Es handelt sich beispielsweise um ringförmige Sensorelemente, durch die der jeweilige Faserstrang 8 läuft, und die wie durch die gestrichelte Linie gezeigt ist bei Vorhandensein ebenfalls mit der Steuerungseinheit 6 kommunizieren. Stellt die Steuerungseinrichtung 6 beispielsweise ein zu geringes zugeführtes Fasergewicht pro Zeiteinheit fest, so kann dies daran liegen, dass eine der Faserrollen aufgebraucht ist. Das Ende eines Faserstrangs wird jedoch sofort von einem solchen Sensorelement 16 detektiert, so dass die Ursache einer etwaigen Abweichung sofort erfasst werden kann.

## Patentansprüche

1. Verfahren zur Herstellung einer faserbeladenen Kunststoffschmelze unter Verwendung eines Extruders mit wenigstens zwei Schnecken, bei welchem Verfahren neben dem oder den aufzuschmelzenden Kunststoffmaterialien wenigstens ein endloser Faserstrang zugeführt und vom Extruder eingezogen wird, **dadurch gekennzeichnet, dass** der Faserstrang unter kontinuierlicher Erfassung der geförderten Stranglänge zugeführt wird und die Einstellung der Schneckendrehzahl in Abhängigkeit des anhand der pro Zeiteinheit zugeführten Stranglänge und des Stranggewichts pro Längeneinheit ermittelten Fasergewichts pro Zeiteinheit erfolgt, und dass mehrere Faserstränge separat zugeführt werden, wobei kontinuierlich die geförderte Stranglänge jedes Faserstrangs erfasst und anhand der pro Zeiteinheit zugeführten Stranglänge jedes Faserstrangs und des jeweiligen Stranggewichts pro Längeneinheit das Fasergewicht jedes Faserstrangs ermittelt und das aus allen Fasergewichten ermittelte Fasergesamtgewicht der Regelung zugrunde gelegt wird.

2. Verfahren nach dem Anspruch 1, **dadurch gekennzeichnet, dass** zur Erfassung der zugeführten Stranglänge ein über den bewegten Faserstrang betätigter Impulsgeber verwendet wird, wobei die Stranglänge anhand der pro Zeiteinheit erfassten Impulse und der pro Impuls geförderten Stranglänge ermittelt wird.

3. Verfahren nach Anspruch 2, **dadurch gekennzeichnet, dass** ein Impulsgeber umfassend zwei einen Faserstrang zwischen sich aufnehmende Andruckrollen verwendet wird, wobei die Drehung wenigstens eine Andruckrolle optisch oder elektrisch erfasst wird.

4. Vorrichtung zur Herstellung einer faserbeladenen Kunststoffschmelze, umfassend einen Extruder (2) mit wenigstens zwei Schnecken (4), **dadurch gekennzeichnet, dass** eine Einrichtung (10) zur kontinuierlichen Erfassung der zugeführten Stranglänge wenigstens eines dem Extruder (2) zuzuführenden Faserstrangs (8), sowie eine Steuerungseinrichtung (6) zur Ermittlung des Fasergewichts pro Zeiteinheit anhand der pro Zeiteinheit zugeführten Stranglänge und des Stranggewichts pro Längeneinheit und zur Einstellung der Schneckendrehzahl in Abhängigkeit des ermittelten Fasergewichts vorhanden sind und dass eine Einrichtung (10) zur Erfassung der zugeführten Stranglänge mehrerer einzelner Faserstränge (8) vorgesehen ist, wobei die Steuerungseinrichtung (6) anhand der pro Zeiteinheit zugeführten Stranglänge jedes Faserstrangs und des jeweiligen Stranggewichts pro Längeneinheit zur Ermittlung des Fasergewichts jedes Faserstrangs (8) und zur Ermittlung des Fasergesamtgewichts aus allen Fasergewichten ausgebildet ist.

5. Vorrichtung nach Anspruch 4, **dadurch gekennzeichnet, dass** die Steuerungseinrichtung (6) die des Extruders (2) ist, die mit der Einrichtung (10) zur Erfassung der Stranglänge kommuniziert.

6. Vorrichtung nach Anspruch 4 oder 5, **dadurch gekennzeichnet, dass** die Einrichtung (10) zur Erfassung der Stranglänge eine der Anzahl zuzuführender Faserstränge (8) entsprechende Anzahl an Impulsgebern (11) umfasst, wobei die Steuerungseinrichtung (6) zur Ermittlung der Stranglänge anhand der pro Zeiteinheit erfassten Impulse und der pro Impuls geförderten Stranglänge ausgebildet ist.

7. Vorrichtung nach Anspruch 6, **dadurch gekennzeichnet, dass** ein Impulsgeber (11) zwei einen Faserstrang (8) zwischen sich aufnehmende Andruckrollen (12, 13) sowie ein Mittel (15) zur optischen oder elektrischen Erfassung der Drehung wenigstens einer Andruckrolle (13) umfasst.

8. Vorrichtung nach einem der Ansprüche 4 bis 7, **dadurch gekennzeichnet, dass** über die Steuerungseinrichtung (6) bei Ermittlung einer außerhalb eines Toleranzbereich liegenden Abweichung des tatsächlich zugeführten Fasergewichts pro Zeiteinheit von einem vorgegebenen Sollwert ein Informationssignal ausgebbar ist.

**Claims**

1. A method for manufacturing a fibre-rich synthetic-material melt using an extruder with at least two screws, in which method at least one endless fibre strand is supplied and drawn in by the extruder alongside the synthetic-material or synthetic-materials to be melted
**characterised in that**
the fibre strand is supplied with a continuous registration of the length of strand conveyed, and the adjustment of the screw speed is implemented dependent upon the fibre weight per unit of time determined on the basis of the strand length supplied per unit of time and the strand weight per unit of length, and
that several fibre strands are supplied separately, wherein the strand length of each conveyed fibre strand is registered continuously, and the fibre weight of each fibre strand is determined on the basis of the strand length of each fibre strand supplied per unit of time and the respective strand weight per unit of length and the total fibre weight determined from all of the fibre weights used as a basis for the control.

2. The method according to claim 1,
**characterised in that**,
in order to register the strand length supplied, an impulse generator activated via the moving fibre strand is used, wherein the strand length is determined on the basis of the impulses registered per unit of time and the strand length conveyed per impulse.

3. The method according to claim 2,
**characterised in that**
an impulse generator comprising two pressure rollers accommodating a fibre strand between them is used, wherein the rotation of at least one pressure roller is registered optically or electrically.

4. A device for manufacturing a fibre-rich synthetic-material melt, comprising an extruder (2) with at least two screws (4),
**characterised in that**
a device (10) for the continuous registration of the supplied strand length of at least one fibre strand (8) to be supplied to the extruder (2), and a control device (6) for determining the fibre weight per unit of time on the basis of the strand length supplied per unit of time and the strand weight per unit of length and for the adjustment of the screw speed dependent upon the fibre weight determined, are provided, and
that a device (10) for registering the supplied strand length of several individual fibre strands (8) is provided, wherein the control device (6) is designed in order to determine the fibre weight of every fibre strand (8) and in order to determine the total fibre weight from all of the fibre weights on the basis of the supplied strand length per unit of time of every fibre strand and the respective strand weight per unit of length.

5. The device according to claim 4,
**characterised in that**
the control device (6) is that of the extruder (2), which communicates with the device (10) in order to register the strand length.

6. The device according to claim 4 or 5,
**characterised in that**
the device (10) for registering the strand length comprises a number of impulse generators (11) corresponding to the number of fibre strands (8) to be supplied, wherein the control device (6) is designed in order to determine the strand length on the basis of the impulses registered per unit of time and the conveyed strand length per impulse.

**7.** The device according to claim 6,
**characterised in that**
an impulse generator (11) comprises two pressure rollers (12, 13) accommodating a fibre strand (8) between them and a means (15) for optical or electrical registration of the rotation of at least one pressure roller (13).

**8.** The device according to any one of claims 4 to 7,
**characterised in that**
an information signal can be output via the control device (6) upon the determination of a deviation disposed outside a tolerance range of the actually supplied fibre weight per unit of time from a specified set value.

**Revendications**

**1.** Procédé pour la fabrication d'une matière plastique en fusion, chargée de fibres, moyennant l'utilisation d'une extrudeuse comportant au moins deux vis sans fin, dans lequel procédé au moins un faisceau de fibres continu est acheminé à côté du ou des matières plastiques à mettre en fusion et est tiré par l'extrudeuse à l'intérieur de celle-ci, **caractérisé en ce que** le faisceau de fibres est acheminé moyennant une détection continue de la longueur de faisceau transportée, et le réglage de la vitesse de rotation des vis sans fin est effectué en fonction du poids des fibres par unité de temps, déterminé à l'appui de la longueur de faisceau acheminée par unité de temps et du poids du faisceau par unité de longueur, et **en ce que** plusieurs faisceaux de fibres sont acheminés séparément, la longueur de chaque faisceau de fibres transporté étant détectée en continu, et le poids des fibres de chaque faisceau de fibres étant déterminé à l'appui de la longueur de faisceau acheminée par unité de temps et du poids respectif du faisceau par unité de longueur, et le poids total des fibres déterminé à partir de tous les poids des fibres est pris en compte pour le réglage.

**2.** Procédé selon la revendication 1, **caractérisé en ce qu'**un générateur d'impulsions, actionné au-dessus du faisceau de fibres déplacé, est utilisé pour détecter la longueur de faisceau acheminée, la longueur du faisceau étant déterminée à l'appui des impulsions détectées par unité de temps et de la longueur du faisceau acheminée par impulsion.

**3.** Procédé selon la revendication 2, **caractérisé en ce que** l'on utilise un générateur d'impulsions comportant deux rouleaux de pression entre lesquels est reçu un faisceau de fibres, la rotation d'au moins un rouleau de pression étant détectée par voie optique ou électrique.

**4.** Dispositif pour la fabrication d'une matière plastique en fusion, chargée de fibres, comportant une extrudeuse (2) avec au moins deux vis sans fin (4), **caractérisé en ce que** sont présentes une unité (10) destinée à détecter en continu la longueur acheminée d'au moins un faisceau de fibres (8), à acheminer vers l'extrudeuse (2), ainsi qu'une unité de commande (6) destinée à déterminer le poids des fibres par unité de temps à l'appui de la longueur du faisceau acheminée par unité de temps et du poids du faisceau par unité de longueur, et destinée à régler la vitesse de rotation des vis sans fin en fonction du poids des fibres déterminé, et **en ce qu'**il prévu une unité (10) destinée à détecter la longueur acheminée de plusieurs faisceaux de fibres (8) individuels, l'unité de commande (6) étant configurée pour déterminer le poids des fibres de chaque faisceau de fibres (8), à l'appui de la longueur de chaque faisceau acheminée par unité de temps et du poids respectif du faisceau par unité de longueur, et pour déterminer le poids total des fibres à partir de tous les poids des fibres.

**5.** Dispositif selon la revendication 4, **caractérisé en ce que** l'unité de commande (6) est celle de l'extrudeuse (2) qui communique avec l'unité (10) destinée à détecter la longueur des faisceaux.

**6.** Dispositif selon la revendication 4 ou 5, **caractérisé en ce que** l'unité (10) destinée à détecter la longueur des faisceaux comporte un nombre de générateurs d'impulsions (11) qui correspond au nombre de faisceaux de fibres (8) à acheminer, l'unité de commande (6) étant configurée pour déterminer la longueur des faisceaux à l'appui des impulsions détectées par unité de temps et de la longueur du faisceau transportée par impulsion.

**7.** Dispositif selon la revendication 6, **caractérisé en ce qu'**un générateur d'impulsions (11) comporte deux rouleaux de pression (12, 13) entre lesquels est reçu un faisceau de fibres (8), ainsi qu'un moyen (15) pour la détection optique ou électrique de la rotation d'au moins un rouleau de pression (13).

**8.** Dispositif selon l'une quelconque des revendications 4 à 7, **caractérisé en ce qu'**un signal d'information peut être délivré par l'intermédiaire de l'unité de commande (6) lorsque celle-ci détermine une divergence, située à l'extérieur d'une zone de tolérances, entre le poids par unité de temps des fibres effectivement acheminées et une valeur de consigne prédéfinie.

FIG. 1

EP 2 138 297 B1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10152246 A1
- DE 3541532
- DE 2100096
- WO 2007070086 A